# EUROPÄISCHE PATENTSCHRIFT

(11) **EP 3 221 206 B1**
(45) Veröffentlichungstag und Bekanntmachung des Hinweises auf die Patenterteilung: **24.10.2018**
(21) Anmeldenummer: 15794848.0
(22) Anmeldetag: 30.10.2015
(51) Int. Cl.: B62D 21/11

(54) **ACHSTRÄGER**
AXLE SUPPORT
ESSIEU

(30) Priorität: 21.11.2014 DE 102014223832
(43) Veröffentlichungstag der Anmeldung: 27.09.2017
(73) Patentinhaber: Bayerische Motoren Werke Aktiengesellschaft, 80809 München (DE)
(72) Erfinder: LORENZ, Tobias, 85391 Allershausen (DE); HELDELE, Felix, 81667 München (DE)
(86) Internationale Anmeldenummer: PCT/EP2015/075307
(87) Internationale Veröffentlichungsnummer: WO 2016/078896

(56) Entgegenhaltungen:
- EP-A2- 1 035 003
- FR-A1- 2 975 350
- US-A- 5 280 957

## Beschreibung

Die hier offenbarte Technologie betrifft einen Achsträger für ein Kraftfahrzeug. Achsträger, beispielsweise für Fünflenkerhinterachsen, sind allgemein bekannt. Bei Fünflenkerhinterachsen sind fünf radführende Lenker vorgesehen, die das Rad mit dem Fahrschemel bzw. Hilfsrahmen verbinden. Über den Fahrschemel erfolgt dann die Karosserieanbindung. Ein solcher Achsträger ist beispielsweise in der Druckschrift EP 1404536 B1 gezeigt.
Insbesondere bei Hybridfahrzeugen kann es vorteilhaft sein, im Achsträger eine elektrische Arbeitsmaschine vorzusehen. Ferner kann es vorteilhaft sein, etwaige Regelungskomponenten, beispielsweise für das Fahrwerk, in den Achsträger zu integrieren. Es existiert ein Bedürfnis, den Achsträger an die geänderten Anforderungen anzupassen, wobei der Achsträger weiterhin die erforderliche Steifigkeit aufweisen muss, ohne dass dabei mehr Bauraum benötigt wird oder aber das Gewicht zu stark zunimmt. Ferner soll der Achsträger auch hinsichtlich der Fertigung vorteilhaft sein.

Die Druckschrift EP 1 035 003 A2 offenbart den Oberbegriff des unabhängigen Anspruchs. Es ist eine Aufgabe der hier offenbarten Technologie, den/die Nachteil(e) der vorbekannten Lösungen zu verringern oder zu beheben. Die Aufgabe(n) wird/werden gelöst durch den Gegenstand des Patentanspruchs 1. Die abhängigen Ansprüche stellen bevorzugte Ausgestaltungen dar.
Die hier offenbarte Technologie betrifft einen Achsträger. Der Achsträger umfasst eine Rahmenstruktur, auch Fahrschemel genannt. Die Rahmenstruktur kann derart gestaltet sein, dass zwischen mindestens einen in Fahrtrichtung x vorderen Querträger und mindestens einen in Fahrtrichtung x hinteren Querträger Bauraum für zusätzliche Fahrzeugkomponenten, beispielsweise eine elektrische (Antriebs-) Arbeitsmaschine und/oder Regelungskomponenten, vorgesehen ist.

Die Rahmenstruktur umfasst mindestens einen oberen Längsträgerstrukturabschnitt und mindestens einen unteren Längsträgerstrukturabschnitt. Der obere Längsträgerstrukturabschnitt verläuft oberhalb einer Antriebswelle. Der untere Längsträgerstrukturabschnitt verläuft unterhalb der Antriebwelle. Bevorzugt verläuft der obere Längsträgerstrukturabschnitt in Fahrzeughochachsenrichtung z oberhalb vom unteren Längsträgerstrukturabschnitt. Bevorzugt ist die Rahmenstruktur derart ausgebildet, dass sich der/die Längsträger des Fahrschemels in Fahrtrichtung x vor der Antriebswelle in obere und untere Längsträgerstrukturabschnitte aufteilt/aufteilen und in Fahrtrichtung x hinter der Antriebswelle wieder zusammengeführt ist/sind. Mit anderen Worten umgeben die oberen und unteren Längsträgerstrukturabschnitte die Antriebswelle.

Die Rahmenstruktur umfasst ferner einen unteren Rahmenstrukturanschlussbereich, der mit dem unteren Längsträgerstrukturabschnitt integral ausgebildet ist oder mit diesem auf einer anderen Weise derart verbunden ist, das Kräfte und Momente vom unteren Längsträgerstrukturabschnitt auf den Rahmenstrukturanschlussbereich übertragbar sind. Die Rahmenstruktur umfasst ferner einen oberen Rahmenstrukturanschlussbereich, der oberhalb des unteren Rahmenstrukturanschlussbereiches angeordnet ist.

Obere Bereiche und Abschnitte der Rahmenstruktur sind in der hier offenbarten Technologie die Bereiche und Abschnitte, die näher zur Fahrzeugkarosserie angeordnet sind als die unteren Bereiche oder Abschnitte. Untere Bereiche oder Abschnitte der Rahmenstruktur sind indes näher am Fahrzeugboden oder an der Fahrbahn angeordnet als obere Bereiche und Abschnitte der Rahmenstruktur. Die Rahmenstruktur kann ferner in Fahrtrichtung vorne und hinten jeweils untere und/oder obere Querträger aufweisen.

Der Achsträger umfasst ferner bevorzugt mindestens eine Stützstrebe, die den unteren Rahmenstrukturanschlussbereich mit dem oberen Rahmenstrukturanschlussbereich verbindet. Der obere Rahmenstrukturanschlussbereich ist näher an einer Karosserieanbindung, insbesondere einer hinteren Karosserieanbindung eines Hinterachsträgers oder einer vorderen Karosserieanbindung eines Vorderradträgers, angeordnet als der untere Rahmenstrukturanschlussbereich.

Ein so aufgebauter Achsträger ermöglicht es, die vorderen und hinteren Querträger so zu beabstanden, dass zwischen ihnen eine zusätzliche Fahrzeugkomponente, beispielsweise eine elektrische Arbeitsmaschine, integriert werden kann. Dabei wird auch dem geringen Bauraum Rechnung getragen, insbesondere im Bereich der Antriebswelle. Insbesondere der Bauraum oberhalb der Antriebswelle ist kritisch. Die hier offenbarte Struktur verteilt die auftretenden Kräfte und Momente des Längsträgers wie bei einem Fachwerk auf den unteren und den oberen Längsträgerstrukturabschnitt. Weiterhin werden die Kräfte und Momente, die auf den unteren Längsträgerstrukturabschnitt wirken, über die Stützstrebe in den oberen Rahmenstrukturanschlussbereich benachbart zu einer Karosserieanbindung übertragen. Somit werden auch die die Karosserieanbindung tragenden (oberen) Ausleger weniger belastet. Die Ausleger stellen Verlängerungen der oberen Längsträgerstrukturabschnitte dar. Insgesamt wird also der obere Längsträger über weite Strecken durch die unteren Abschnitte und Bereiche der Rahmenstruktur und den Stützstreben entlastet. Insbesondere wird der untere Lastpfad des unteren Längsträgerstrukturabschnitts entgegen der Fahrtrichtung x nach hinten erweitert. Die Stützstreben stützen die Ausleger bzw. die Karosserieanbindung ab. Aufgrund der Fachwerkstruktur können Strukturelemente mit vergleichsweise geringen Querschnitten eingesetzt werden. Somit können sich Platzbedarf, Gewicht und Materialkosten im Vergleich zu massiveren Lösungen ohne Fachwerkaufbau verringern.

Bevorzugt ist der untere Rahmenstrukturanschlussbereich an einem unteren Querträger ausgebildet. Für hintere Achsträger beispielsweise einem unteren hinteren Querträger. Ein Verbindungselement kann ferner den unteren Längsträgerstrukturabschnitt mit dem unteren Rahmenstrukturanschlussbereich verbinden. Eine solche Ausgestaltung ermöglicht einen Aufbau, bei dem der untere Längsträgerstrukturabschnitt ein lediglich in eine Richtung gebogenes Rohrelement aufweist.
Der untere Längsträgerstrukturabschnitt kann bevorzugt zur oberen Längsträgerstrukturabschnitt hin gebogen verlaufen. Ein solches Rohrelement lässt sich einfacher herstellen und in die Rahmenstruktur integrieren als ein doppelt gebogenes Rohrelement. Bevorzugt ist der untere Längsträgerstrukturabschnitt an den oberen Längsträgerstrukturabschnitt befestigt. Insbesondere kann das Verbindungselement als Stützblech ausgebildet sein, welches an das Rohr des unteren Längsträgerstrukturabschnittes angeschweißt ist. Das Verbindungselement kann auch mehrere Komponenten umfassen, beispielsweise das Stützblech und eine Rohrelement, bevorzugt ein Vertikalprofil, wie es weiter unten näher beschrieben wird.

In einer alternativen Ausgestaltung ist der untere Rahmenstrukturanschlussbereich in einem anderen unteren Strukturbereich integriert, beispielsweise im unteren Längsträgerstrukturabschnitt. Mit anderen Worten verläuft dann die Stützstrebe vom oberen Rahmenstrukturanschlussbereich benachbart zur Karosserieanbindung direkt zum unteren Längsträgerstrukturabschnitt. Der untere Querträger kann auch direkt mit dem unteren Längsträgerstrukturabschnitt verbunden sein. Auch hier stellt sich ein unterer Lastpfad zur Karosserieanbindung ein.

Vorteilhaft kann an einer Stabilisatorbefestigung der obere Rahmenstrukturanschlussbereich ausgebildet sein. Eine Stabilisatorbefestigung, in der Regel eine Schelle von einem Stabilisatorlager, ist bevorzugt an einem Ausleger oder aber an einem oberen Querträger vorgesehen, besonders bevorzugt benachbart zu der Karosserieanbindung. Die Ausleger meistens im Eckbereich angeordnet, in dem Querträger und Längsträger der Rahmenstruktur aufeinander treffen. Die Ausleger sind Bestandteil der Rahmenstruktur und stehen aus dem Eckbereich hervor, insbesondere in/entgegen der Fahrrichtung x und/oder in/entgegen der Fahrzeugquerrichtung y. Am hervorstehenden Ende der Ausleger können jeweils die Karosserieanbindungen vorgesehen sein.

Die Rahmenstruktur, insbesondere der untere Längsträgerstrukturabschnitt, der obere Längsträgerstrukturabschnitt, der untere Querträger, das Vertikalprofil und/oder die Ausleger, können zumindest bereichsweise aus Rohren geformt sein. Eine Rohrkonstruktion ist insbesondere hinsichtlich des Gewichts sowie hinsichtlich der Fertigung vorteilhaft.

Die hier offenbarte Technologie wird nun anhand der Figuren näher erläutert. Es zeigen:
Fig. 1 eine perspektivische Seitenansicht auf den Achsträger 10,
Fig. 2 eine perspektivische Ansicht von hinten auf den Achsträger 10,
Fig. 3 eine perspektivische Ansicht von oben auf den Achsträger 10,
Fig. 4 eine perspektivische Ansicht von unten auf den Achsträger 10, und
Fig. 5 eine perspektivische Ansicht von hinten auf den Achsträger 10.

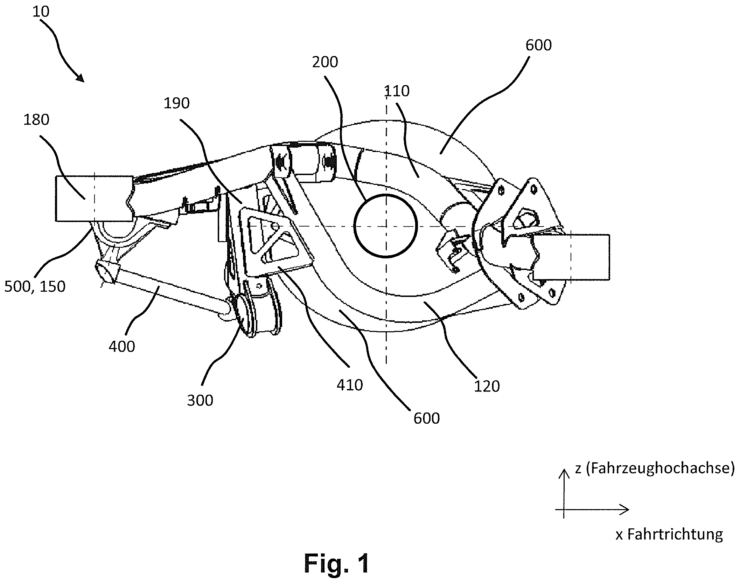

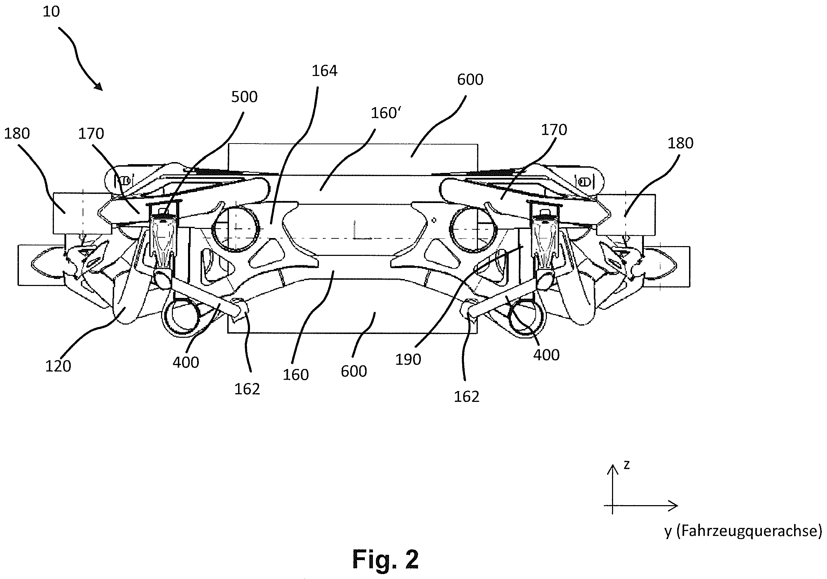

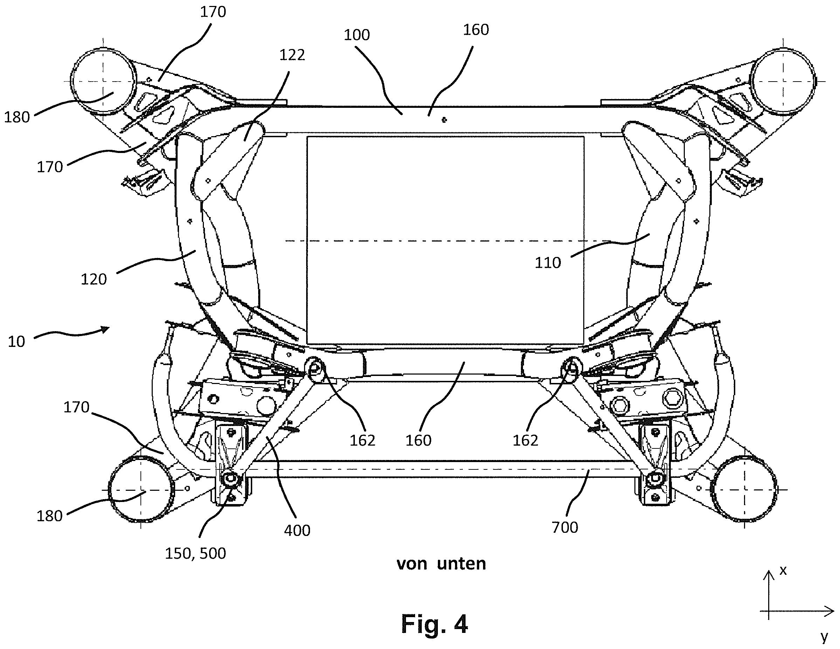

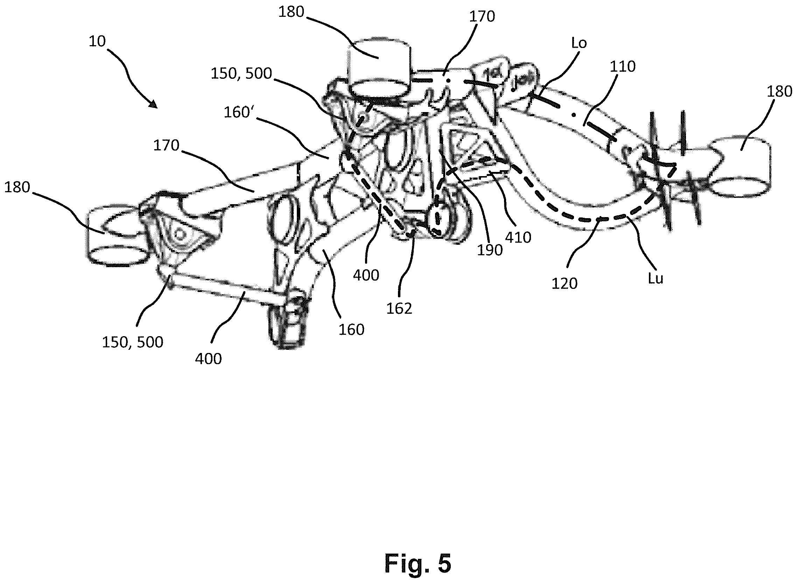

In der Fig. 1 sind der obere Längsträgerstrukturabschnitt 110 und der untere Längsträgerstrukturabschnitt 120 zu sehen. Der obere Längsträgerstrukturabschnitt 110 verläuft oberhalb der Antriebswelle 200 und der untere Längsträgerstrukturabschnitt 120 unterhalb der Antriebswelle 200. In Fahrtrichtung x vor der Antriebswelle 200 sind die beiden Längsträgerstrukturabschnitte 110, 120 in der Nähe der vorderen Ausleger 170, 170 (vgl. Fig. 4) ungefähr auf gleicher Höhe angeordnet. Der obere Längsträgerstrukturabschnitt 110 geht hier in einen vorderen Ausleger über. Der untere Längsträgerstrukturabschnitt 120 ist im vorderen Bereich am vorderen Querträger 160 befestigt (vgl. Fig. 4). Entgegen der Fahrtrichtung x erstreckt sich der untere Längsträgerstrukturabschnitt 120 zunächst leicht nach unten. Kurz hinter der Antriebswelle 200 verläuft der untere Längsträgerstrukturabschnitt 120 dann schräg nach oben bevor er dann in einem Bereich zwischen dem hinteren Querträger 160 bzw. dem Vertikalprofil 190 und der Antriebswelle 200 auf den oberen Längsträgerstrukturabschnitt 110 trifft. Der obere Längsträgerstrukturabschnitt 110 erstreckt sich ebenfalls von dem vorderen äußeren Ausleger 170 entgegen der Fahrtrichtung x. Der obere Längsträgerstrukturabschnitt 110 verläuft zunächst bis kurz hinter der Antriebswelle 200 ansteigend und anschließend leicht abfallend bis er schließlich in den hinteren äußeren Ausleger 170 mündet. Das Verbindungselement 410 ist hier als Stützblech 410 ausgebildet. Das Stützblech 410 verbindet den hinter der Antriebswelle 200 schräg nach oben verlaufenden Teil des unteren Längsträgerstrukturabschnittes 120 mit einem Vertikalprofil 190 (vgl. Fig. 5). Das Vertikalprofil verläuft im Wesentlichen in vertikaler Richtung bzw. schräg nach oben und ist mit dem unteren hinteren Querträger 160 verbunden (vgl. Fig. 2, 5). An dem unteren hinteren Querträger 160 ist der untere Rahmenstrukturanschlussbereich 162 vorgesehen (vgl. Fig. 2, 4, 5). Von diesem unteren Rahmenstrukturanschlussbereich 162 erstreckt sich die Stützstrebe 400 entgegen der Fahrtrichtung x schräg in Richtung der Fahrzeughochachse z und schräg in Richtung zu dem jeweiligen äußeren Rand (vgl. Fig. 4). Da der obere Rahmenstrukturanschlussbereich 150 benachbart zu der Karosserieanbindung 180 angeordnet ist, verlaufen die Stützstreben 400 im Wesentlichen vom unteren Rahmenstrukturanschlussbereich 162 in Richtung der Karosserieanbindung 180 bzw. in Richtung der Stabilisatorbefestigung 500. Der obere Rahmenstrukturanschlussbereich 150 ist hier in die Stabilisatorbefestigung 500 mit integriert. Somit lässt sich eine vergleichsweise günstige und steife Anbindung nahe an der Karosserieanbindung 180 realisieren. Zwischen den Querträger 160 und zwischen den oberen und unteren Längsträgerstrukturabschnitten 110, 120 ist hier eine elektrische Arbeitsmaschine 600 angeordnet.

Fig. 2 zeigt den Achsträger 10 von hinten. Die Versteifungsbleche 164 sind zwischen den oberen Querträger 160' und den unteren Querträger 160 vorgesehen. Diese Bleche 164 können mit den Rohrelementen der Querträger 160, 160' verschweißt sein. An den oberen Querträger 160' sind auf beiden Seiten innere Ausleger 170 befestigt, die schräg nach außen verlaufen und an den Karosserieanbindungen 180 enden.

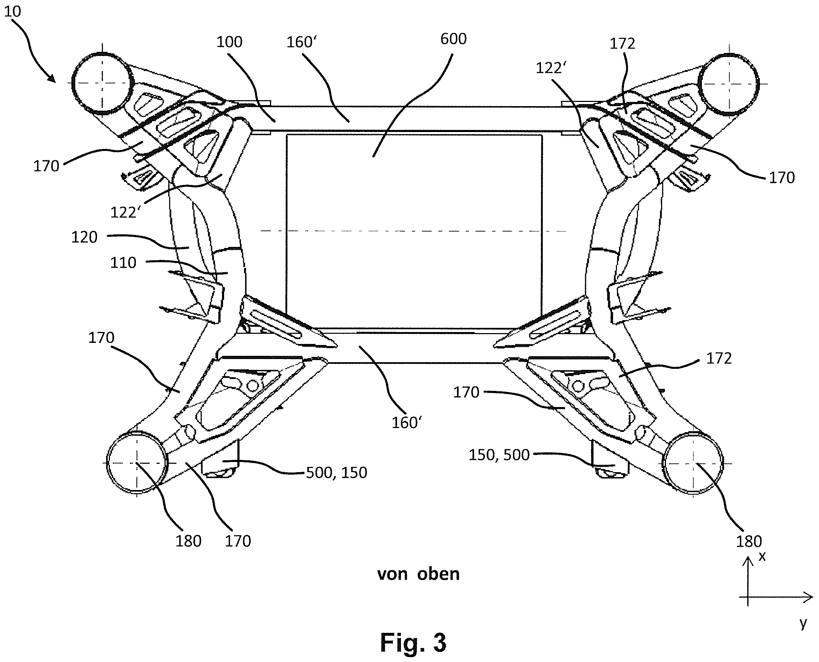

Fig. 3 zeigt den Achsträger 10 von oben. Gut ersichtlich sind die oberen Bereiche und Abschnitte 170, 180, 172, 160', 122' der Rahmenstruktur 100. Die Bleche 172 dienen zur weiteren Versteifung des Achsträgers 10. Insbesondere in den Ecken, in denen die Querträger 160', die oberen Längsträgerstrukturabschnitte 110 und die Ausleger 170 aufeinander treffen, sind Verstärkungsbleche 172 und Verbindungrohre 122' angeordnet.

Fig. 4 zeigt den Achsträger 10 von unten. Gut ersichtlich sind die unteren Bereiche und Abschnitte 160, 162, 120, 122 der Rahmenstruktur 100. Ferner ist hier der Stabilisator 700 gezeigt.

Fig. 5 zeigt perspektivisch von schräg hinten unten den Achsträger 10. Strichpunktiert ist ein oberer Lastpfad Lo der Kräfte und Momente eingetragen. Der Lastpfad Lo ist hier idealisiert dargestellt. Er beginnt hier in einem Bereich nahe der vorderen Karosserieanbindung 180, erstreckt sich dann entgegen der Fahrtrichtung x über den oberen Längsträgerstrukturabschnitt 110 und den äußeren Ausleger 170 und mündet dann in der hinteren Karosserieanbindung 180. Ein unterer Lastpfad Lu ist gestrichelt gezeigt. Er beginnt hier ebenfalls in einem Bereich nahe der vorderen Karosserieanbindung 180 und erstreckt sich dann entgegen der Fahrtrichtung x über folgende Elemente: unterer Längsträgerstrukturabschnitt 120, Stützblech 410, Vertikalprofil 190, unterer hinterer Querträger 160, unterer Rahmenstrukturanschlussbereich 162, Stützstrebe 400, Stabilisatorbefestigung 500 und innerer Ausleger 170. Vom inneren Ausleger 170 aus mündet der untere Lastpfad Lu dann schließlich in der hinteren Karosserieanbindung 180.

Meistens sind hier die strukturellen Elemente und Lastpfade für eine Fahrzeugseite bzw. für die Aufhängung von einem Rad erläutert. Mit umfasst ist selbstverständlich die in den Figuren gezeigte symmetrische Ausgestaltung, bei der beide Fahrzeugseiten bzw. beide Räder nach dem gleichen Prinzip mit den entsprechend gleich ausgebildeten Elementen gestaltet sind. Die Offenbarung ist also nicht auf die Einzahl der Elemente beschränkt, sondern umschließt gleichzeitig auch deren Mehrzahl. Ist in der Beschreibung beispielsweise von "dem oberen Längsträgerstrukturabschnitt 110 des Achsträgers10" die Rede, so soll damit gleichzeitig die Ausgestaltung "die oberen Längsträgerstrukturabschnitte 110 des Achsträgers 10" mit umfasst sein.

## Patentansprüche

1. Achsträger (10), umfassend eine Rahmenstruktur (100) mit einem oberen Längsträgerstrukturabschnitt (110), einem unteren Längsträgerstrukturabschnitt (120), einem unteren Rahmenstrukturanschlussbereich (162) und einem oberen Rahmenstrukturanschlussbereich (150), wobei der obere Längsträgerstrukturabschnitt (110) oberhalb einer Antriebswelle (200) verläuft, wobei der untere Längsträgerstrukturabschnitt (120) unterhalb der Antriebwelle (200) verläuft, und wobei der untere Rahmenstrukturanschlussbereich (162) mit dem unteren Längsträgerstrukturabschnitt (110) integral ausgebildet oder mit diesem verbunden ist; **dadurch gekennzeichnet, dass**
eine Stützstrebe (400) den unteren Rahmenstrukturanschlussbereich (162) mit dem oberen Rahmenstrukturanschlussbereich (150) verbindet, wobei der obere Rahmenstrukturanschlussbereich (150) näher an einer Karosserieanbindung (180) angeordnet ist als der untere Rahmenstrukturanschlussbereich (162).

2. Achsträger (10) nach Anspruch 1, wobei der untere Rahmenstrukturanschlussbereich (162) an einem unteren Querträger (160) ausgebildet ist.

3. Achsträger (10) nach Anspruch 1 oder 2, wobei ein Verbindungselement (410) den unteren Längsträgerstrukturabschnitt (120) mit dem unteren Rahmenstrukturanschlussbereich (162) verbindet.

4. Achsträger (10) nach einem der vorherigen Ansprüche, wobei der untere Längsträgerstrukturabschnitt (120) zum oberen Längsträgerstrukturabschnitt (110) hin gebogen verläuft, und wobei der untere Längsträgerstrukturabschnitt (120) an den oberen Längsträgerstrukturabschnitt (110) befestigt ist.

5. Achsträger (10) nach einem der vorherigen Ansprüche, wobei an einer Stabilisatorbefestigung (500) der obere Rahmenstrukturanschlussbereich (150) ausgebildet ist.

6. Achsträger (10) nach einem der vorherigen Ansprüche, wobei die Rahmenstruktur (100), insbesondere der untere Längsträgerstrukturabschnitt (120), der obere Längsträgerstrukturabschnitt (110), der untere Querträger (160), mindestens ein Vertikalprofil (190) und/oder der Ausleger (170) zumindest bereichsweise aus Rohren geformt sind.

7. Achsträger (10) nach einem der vorherigen Ansprüche, wobei die Rahmenstruktur (100) derart gestaltet ist, dass zwischen zumindest einem vorderen Querträger (160, 160') und zumindest einem hinteren Querträger (160, 160') zumindest eine zusätzliche Fahrzeugkomponente aufnehmbar ist.

8. Achsträger (10) nach Anspruch 7, wobei die zumindest eine zusätzliche Fahrzeugkomponente eine elektrische Arbeitsmaschine und/oder eine Regelungskomponente ist.

9. Achsträger (10) nach einem der vorherigen Ansprüche, wobei fünf radführende Lenker vorgesehen sind.

## Claims

1. An axle support (10), comprising a frame structure (100) with an upper longitudinal member structure portion (110), a lower longitudinal member structure portion (120), a lower frame structure connection region (162) and an upper frame structure connection region (150), wherein the upper longitudinal member structure portion (110) runs above a drive shaft (200), wherein the lower longitudinal member structure portion (120) runs below the drive shaft (200), and wherein the lower frame structure connection region (162) is formed integrally with the lower longitudinal member structure portion (110) or is connected thereto, **characterised in that** a supporting strut (400) connects the lower frame structure connection region (162) to the upper frame structure connection region (150), wherein the upper frame structure connection region (150) is arranged closer than the lower frame structure connection region (162) to a body connection (180).

2. An axle support (10) according to claim 1, wherein the lower frame structure connection region (162) is formed on a lower cross member (160).

3. An axle support (10) according to claim 1 or 2, wherein a connection element (410) connects the lower longitudinal member structure portion (120) to the lower frame structure connection region (162).

4. An axle support (10) according to any one of the preceding claims, wherein the lower longitudinal member structure portion (120) runs in a curved manner towards the upper longitudinal member structure portion (110), and wherein the lower longitudinal member structure portion (120) is fastened to the upper longitudinal member structure portion (110).

5. An axle support (10) according to any one of the preceding claims, wherein the upper frame structure connection region (150) is formed on a stabiliser fastening (500).

6. An axle support (10) according to any one of the preceding claims, wherein the frame structure (100), more especially the lower longitudinal member structure portion (120), the upper longitudinal member structure portion (110), the lower cross member (160), at least one vertical profile (190) and/or the side arm (170) are formed from pipes at least in regions.

7. An axle support (10) according to any one of the preceding claims, wherein the frame structure (100) is formed in such a way that at least one additional vehicle component can be received between at least one front cross member (160, 160') and at least one rear cross member (160, 160').

8. An axle support (10) according to claim 7, wherein the at least one additional vehicle component is an electric machine and/or a control component.

9. An axle support (10) according to any one of the preceding claims, wherein five wheel-guiding links are provided.

## Revendications

1. Support d'essieu (10) comprenant une structure de châssis (100) ayant un segment de structure de support longitudinal supérieur (110), un segment de structure de support longitudinal inférieur (120), une zone de raccordement de structure de châssis inférieure (162) et une zone de raccordement de structure de châssis supérieure (150), le segment de structure de support longitudinal supérieur (110) s'étendant au-dessus de l'arbre d'entraînement (200), le segment de structure de support longitudinal inférieur (120) s'étendant au-dessous de l'arbre d'entraînement (200) et la zone de raccordement de structure de châssis inférieure (162) étant réalisée intégralement avec le segment de structure de support longitudinal supérieur (110), ou reliée à celui-ci,
**caractérisé en ce qu'**
une entretoise d'appui (400) relie la zone de raccordement de structure de châssis inférieure (162) avec la zone de raccordement de structure de châssis supérieure (150), la zone de raccordement de structure de châssis supérieure (150) étant plus proche d'une connexion de carrosserie (180) que la zone de raccordement de structure de châssis inférieur (162).

2. Support d'essieu (10) conforme à la revendication 1,
dans lequel la zone de raccordement de structure de châssis inférieure (162) est formée sur un support transversal inférieur (160).

3. Support d'essieu (10) conforme à la revendication 1 ou 2,
dans lequel un élément de liaison (410) relie le segment de structure de support longitudinal inférieur (120) avec la zone de raccordement de structure de châssis inférieure (162).

4. Support d'essieu (10) conforme à l'une des revendications précédentes,
dans lequel le segment de structure de support longitudinal inférieur (120) est courbé vers le segment de structure de support longitudinal supérieur (110), et le segment de structure de support longitudinal inférieur (120) est fixé sur le segment de structure de support longitudinal supérieur (110).

5. Support d'essieu (10) conforme à l'une des revendications précédentes,
dans lequel la zone de raccordement de structure de châssis supérieure (150) est formée sur une fixation de barre de stabilisation (500).

6. Support d'essieu (10) conforme à l'une des revendications précédentes,
dans lequel la structure de châssis (100), en particulier le segment de structure de support longitudinal inférieur (120), le segment de structure de support longitudinal supérieur (110), le support transversal inférieur (160), au moins un profilé vertical (190) et/ou le prolongement en porte-à-faux (170) est(sont) formé(s) au moins par zones par des tubes.

7. Support d'essieu (10) conforme à l'une des revendications précédentes,
dans lequel la structure de châssis (100) est réalisée de sorte qu'au moins un composant supplémentaire du véhicule puisse être logé entre au moins un support transversal avant (160, 160') et au moins un support transversal arrière (160, 160').

8. Support d'essieu (10) conforme à la revendication 7,
dans lequel le composant supplémentaire du véhicule est une machine de travail électrique et/ou un composant de régulation.

9. Support d'essieu (10) conforme à l'une des revendications précédentes,
dans lequel il est prévu cinq bras de suspension de guidage de roue.
